# EUROPEAN PATENT APPLICATION

(11) **EP 4 832 371 A1**
(43) Date of publication of application: **28.10.2026**
(21) Application number: 24906448.6
(22) Date of filing: 19.12.2024
(51) Int. Cl.: H04B 7/185, H04W 76/10

(54) **METHOD FOR INDICATING DURATION OF TIMER AND COMMUNICATION DEVICE**

(30) Priority: 20.12.2023 CN 202311765352
(71) Applicant: Beijing Unisoc Communications Technology Co., Ltd, Beijing 100083 (CN)
(72) Inventor: HAN, Lufeng, Beijing 100083 (CN)
(74) Representative: Cabinet Camus Lebkiri
(86) International application number: PCT/CN2024/140546
(87) International publication number: WO 2025/130969

(57) **Abstract**

The present application discloses a method for indicating the duration of a timer and a communication device. The method for indicating the duration of a timer comprises: determining the duration of a timer, the duration of the timer comprising a storage duration of uplink information and/or downlink information on a flight device, and the uplink information and/or the downlink information being information that needs to be transmitted during the operation of the timer; and sending indication information, the indication information indicating the duration of the timer. By adopting the present application, it is possible to improve the accuracy of the determined duration of the timer, thereby improving the success rate of communication.

## Description

The present disclosure claims priority to Chinese Patent Application No. 202311765352.1, filed with the China National Intellectual Property Administration on December 20, 2023, and entitled "METHOD FOR INDICATING DURATION OF TIMER AND COMMUNICATION DEVICE", the entire contents of which are incorporated herein by reference.

### TECHNICAL FIELD

The present disclosure relates to the technical field of communications, and in particular, to a method for indicating a duration of a timer and a communication apparatus.

### BACKGROUND

A timer in communication are usually configured to supervise a communication procedure, for example, a timer is initiated after a communication apparatus sends a message, and the timer is stopped if a response is received before the timer expires, and if a response is not received after the timer expires, the communication is considered to have failed, thus to resend or terminate the related communication procedure. A duration of the timer is usually relatively short, such as a few seconds. With the development of communication technology, some network elements in a communication network may be deployed in a flight device, such as deploying access network devices in satellites. The duration of existing timers is no longer suitable for complex scenarios where network elements are set in flight device in communication networks, which may result in ineffective supervision of the communication procedure and communication failures.

### SUMMARY

A method for indicating a duration of a timer and a communication apparatus are provided in the embodiments of the present disclosure, which may improve the accuracy of determining the duration of the timer and thereby increase a success rate of communication.

In a first aspect, a method for indicating a duration of a timer is provided in the embodiments of the present disclosure, which includes:
determining a duration of a timer, where the duration of the timer includes a storage duration for uplink information and/or downlink information on a flight device, the uplink information and/or the downlink information is information that needs to be transmitted during an operating process of the timer; and
sending indication information, where the indication information indicates the duration of the timer.

Based on the description of the first aspect, the determined duration of the timer includes a storage duration for the uplink information and/or the downlink information on the flight device that needs to be transmitted during an operating process of the timer. When determining the duration of the timer, the storage duration for the uplink information and/or the downlink information stored on the flight device is considered when communication between the flight device and a network on the ground is discontinuous, thereby improving the accuracy of the determined duration of the timer and improving the communication success rate.

In one possible implementation, the method further includes:
setting a value of the timer according to the duration of the timer.

By implementing this method, the value of the timer may be set according to the determined duration of the timer, thereby improving the communication success rate.

In one possible implementation, the method is applied to a first communication apparatus;
the first communication apparatus is a network element in a core network, or the first communication apparatus is an access network device, or the first communication apparatus is a terminal device.

By implementing this method, a network element in the core network or an access network device or a terminal device may determine the duration of the timer and indicate the duration to other devices, thereby improving the communication success rate.

In one possible implementation, the core network and the terminal device are deployed in a ground network, and the access network device is deployed in a satellite.

By implementing this method, the core network and the terminal device are deployed in the ground network, while the access network device is deployed in the satellite. The information exchanged between the terminal device and the core network may be stored in the access network device in the satellite due to communication link interruption, resulting in longer communication time. Correspondingly, the duration of the timer also needs to include a duration of information stored on the satellite, thereby improving communication success rate.

In one possible implementation, sending the indication information includes:
sending the indication information to a second communication apparatus;
where the second communication apparatus includes at least one of: an access and mobility management function (AMF) network element, a session management function (SMF) network element, a policy control function (PCF) network element, a terminal device or user plane function (UPF) network element, an access network device (e.g., RAN), a unified data management (UDM) network element, an authentication server function (AUSF) network element, a mobility management entity (MME), a short message service center (SMSC), a serving-gateway, a packet data network (PDN) gateway.

By implementing this method, the first communication apparatus may send the duration of the timer to at least one type of network element, making it easier for various network elements to set values of their own timers and improve the communication success rate.

In one possible implementation, the first communication apparatus is the AMF network element, the second communication apparatus is the terminal device, and the indication information is carried in a non-access stratum (NAS) signaling or a user plane message.

By implementing this method, after the AMF network element determines the duration of the timer, it may send it to the terminal device through the NAS signaling or user plane message, making it easier for the terminal device to improve the accuracy of setting the value of the timer.

In one possible implementation, the NAS signaling includes one of: an identity request, an authentication request, a registration response, a downlink NAS transport, a configuration update message for the terminal device, a short message.

By implementing this method, the duration of the timer may be carried in the NAS signaling, thereby saving signaling overhead.

In one possible implementation, the indication information includes an index value and a time unit, where the index value indicates a number of time units included in the duration of the timer.

By implementing this method, a number and time unit may be indicated separately, and the time unit may be indicated uniformly, saving costs.

In one possible implementation, the flight device is a satellite, and determining the duration of the timer includes:
determining the duration of the timer according to satellite information, where the satellite information includes information of a constellation associated with the satellite and/or operating information of the satellite.

By implementing this method, the duration of the timer may be determined in combination with the information of the constellation associated with the satellite and/or the operating information of the satellite, thereby improving the accuracy of timer duration determination.

In one possible implementation, the operating information of the satellite includes at least one of: ephemeris data of the satellite, an orbital altitude of the satellite, an operating period of the satellite, a position of the satellite, or a working time of the satellite;
the information of the constellation associated with the satellite includes at least one of: a number of satellites included in the constellation associated with the satellite, a number of satellites connected to a ground station in the constellation associated with the satellite, operating information of respective satellites included in the constellation associated with the satellite, and communication information between the satellites in the constellation associated with the satellite and the ground station.

In one possible implementation, determining the duration of the timer according to the satellite information includes:
determining the duration of the timer based on the satellite information and information of a third communication apparatus;
where the information of the third communication apparatus includes information of a ground station and/or information of a terminal device; the information of the ground station includes position information of the ground station and/or time information about the ground station being capable of receiving and sending information, and the information of the terminal device includes position information of the terminal device and/or time information about the terminal device being capable of receiving and sending information.

By implementing this method, in a case of determining the duration of the timer, not only the information of satellite but also the information of the third communication apparatus associated with the satellite is considered, which may improve the accuracy of determining the duration of the timer.

In one possible implementation, the position information of the ground station includes at least one of: a geographical position of the ground station, a height of the ground station, and a speed of the ground station; the time information about the ground station being capable of receiving and sending information includes at least one of: an operating time of the ground station, or time information of the ground station being capable of performing communication with a device on the satellite. The time information includes, for example, a starting time and a time of duration.

The position information of the terminal device includes at least one of: a geographical position of the terminal device or a speed of the terminal device; and the time information about the terminal device being capable of receiving and sending information includes at least one of: a time for periodic registration for the terminal device, a time for de-registration for the terminal device, power-saving information of the terminal device, a sleep time of the terminal device, time information of the terminal device being in a coverage area of the satellite, and time information of the terminal device being not in a coverage area of the satellite. The time information includes, for example, a starting time and a time of duration.

By implementing this method, the duration of the timer may be determined in combination with the position information and/or the time of being capable of receiving and sending information for the ground station and the position information and/or the time of being capable of receiving and sending information for the terminal device, which may improve the accuracy of the determining the duration of the timer.

In one possible implementation, the information of the satellite and/or the information of the ground station is from an application server and/or an operation management function network element, and the information of the terminal device is from the terminal device, or the application server, or the operation management function network element.

By implementing this method, the satellite information and/or information of the ground station and the information of the terminal device may be obtained from other network elements, facilitating the determination of the duration of the timer.

In a second aspect, a method for indicating a duration of a timer is provided in the embodiments of the present disclosure, which includes:
receiving indication information, where the indication information indicates a duration of a timer, the duration of the timer includes a storage duration for uplink information and/or downlink information on a flight device, the uplink information and/or the downlink information is information that needs to be transmitted during an operating process of the timer; and
setting a value of the timer according to the duration of the timer.

In one possible implementation, the indication information includes an index value and a time unit, where the index value indicates a number of time units included in the duration of the timer.

In one possible implementation, setting the value of the timer according to the duration of the timer includes:
updating the value of the timer to the duration of the timer; or setting a remaining operating duration of the timer as a difference between the duration of the timer and a duration that the timer already has operated.

In one possible implementation, setting the remaining operating duration of the timer as the difference between the duration of the timer and the duration that the timer already has operated further includes:
sending a message and initiating the timer, where an initial value of the timer is a default value or a pre-configured value.

By implementing this method, a message is sent before determining the duration of the timer to set the value of the timer to the initial value, making it easier to update the value of the timer after determining the duration of the timer.

In one possible implementation, the message is a NAS message.

In one possible implementation, the NAS message includes a registration request or a service request.

By implementing this method, in a case where the terminal device sends a registration request or service request, it may initiate the timer and set an initial value for subsequent updates of the value of the timer.

In one possible implementation, the flight device is a satellite, and the default value or the pre-configured value is determined based on at least one of a network identifier selected by the terminal device, an access technology for the satellite, and an operating mode of a network where the satellite is located;
the access technology includes one of: low orbit satellite access, medium orbit satellite access, or high orbit satellite access; the operating mode is a store-and-forward mode, where in the store-and-forward mode, in response to that the satellite is not capable of performing communication with a ground station or a terminal device, the uplink data and/or the downlink data is stored in a device in the satellite, and in response to that the satellite is capable of performing communication with the ground station or the terminal device, the stored uplink data and/or downlink data is forwarded to the ground station or the terminal device.

By implementing this method, the default value or pre-configured value may also be determined based on at least one factor, taking into account satellite access technology, thereby improving the accuracy of the initial value of the timer.

In one possible implementation, the indication information is carried in a non-access stratum (NAS) signaling or a user plane message.

By implementing this method, the indication information is carried in the NAS signaling or user plane message, saving signaling overhead.

In a third aspect, a communication apparatus is provided in the embodiments of the present disclosure, which includes:
a determination unit, configured to determine a duration of a timer, where the duration of the timer includes a storage duration for uplink information and/or downlink information on a flight device, the uplink information and/or the downlink information is information that needs to be transmitted during an operating process of the timer; and
a sending unit, configured to send indication information, where the indication information indicates the duration of the timer.

In a fourth aspect, a communication apparatus is provided in the embodiments of the present disclosure, which includes:
a receiving unit, configured to receive indication information, where the indication information indicates a duration of a timer, the duration of the timer includes a storage duration for uplink information and/or downlink information on a flight device, the uplink information and/or the downlink information is information that needs to be transmitted during an operating process of the timer; and
a setting unit, configured to set a value of the timer according to the duration of the timer.

In a fifth aspect, a communication apparatus is provided in the embodiments of the present disclosure. The communication apparatus includes a processor and a memory, where the processor and the memory are connected to each other, where the memory is configured to store computer programs, the processor is configured to execute the computer programs, to execute the method according to the first aspect or any of optional implementations in the first aspect, or to execute the method according to the second aspect or any of optional implementations in the second aspect.

In a sixth aspect, a chip is provided in the embodiments of the present disclosure, the chip includes a processor and an interface, the processor is coupled to the interface; the interface is configured to receive or output a signal, and the processor is configured to execute code instructions, to execute the method according to the first aspect or any of optional implementations in the first aspect, or to execute the method according to the second aspect or any of optional implementations in the second aspect.

In a seventh aspect, a module device is provided in the embodiments of the present disclosure, the module device includes a communication module, a power module, a storage module, and a chip module, where the power module is configured to provide electrical energy to the module device; the storage module is configured to store data and/or instructions; the communication module is configured to communicate with external devices; the chip module is configured to invoke the data and/or instructions stored in the storage module, to execute the method according to the first aspect or any of optional implementations in the first aspect, or to execute the method according to the second aspect or any of optional implementations in the second aspect.

In an eighth aspect, a computer-readable storage medium is provided in the embodiments of the present disclosure, the computer-readable storage medium stores computer programs, the computer programs include program instructions, upon a computer executing the program instructions, the method according to the first aspect or any of optional implementations in the first aspect is implemented, or the method according to the second aspect or any of optional implementations in the second aspect is implemented.

In a ninth aspect, a computer program product is provided in the embodiments of the present disclosure, the computer program product includes computer programs or computer codes, upon the computer programs or computer codes being run on a computer, the method according to the first aspect or any of optional implementations in the first aspect is implemented, or the method according to the second aspect or any of optional implementations in the second aspect is implemented.

In a tenth aspect, a communication system is provided in the embodiments of the present disclosure. The communication system includes a first communication apparatus and a second communication apparatus.

### BRIEF DESCRIPTION OF THE DRAWINGS

FIG. 1 is a structural schematic diagram of a 5G communication system provided in the embodiments of the present disclosure.
FIG. 2 is a structural schematic diagram of a communication system provided in the embodiments of the present disclosure.
FIG. 3a is a schematic diagram of a position of a flight device at time t1 provided in the embodiments of the present disclosure.
FIG. 3b is a schematic diagram of a position of a flight device at time t2 provided in the embodiments of the present disclosure.
FIG. 4 is a flowchart of a method for indicating a duration of a timer provided in the embodiments of the present disclosure.
FIG. 5 is a flowchart of another method for indicating a duration of a timer provided in the embodiments of the present disclosure.
FIG. 6 is an example of a scenario for a method for indicating a duration of a timer provided in the embodiments of the present disclosure.
FIG. 7 is another example of a scenario for a method for indicating a duration of a timer provided in the embodiments of the present disclosure.
FIG. 8 is yet another example of a scenario for a method for indicating a duration of a timer provided in the embodiments of the present disclosure.
FIG. 9 is yet another example of a scenario for a method for indicating a duration of a timer provided in the embodiments of the present disclosure.
FIG. 10 is a structural schematic diagram of a communication apparatus provided in the embodiments of the present disclosure.
FIG. 11 is a structural schematic diagram of another communication apparatus provided in the embodiments of the present disclosure.
FIG. 12 is a structural schematic diagram of yet another communication apparatus provided in the embodiments of the present disclosure.
FIG. 13 is a structural schematic diagram of a module device provided in the embodiments of the present disclosure.

### DETAILED DESCRIPTION

In the embodiments of the present disclosure, unless otherwise specified, the character "/" indicates that related objects before and after the character are in an "or" relationship. For example, A/B may represent either A or B. "And/or" describes an association relationship of associated objects, which indicates that there may be three types of relationships, for example, A and/or B may represent these three conditions: A exists alone, both A and B exist, and B exists alone.

It should be pointed out that the terms "first" and "second," etc., mentioned in the embodiments of the present disclosure are only used for purpose of distinguishing and cannot be understood as indicating or implying relative importance or implying a number of technical features indicated, nor can they be understood as indicating or implying order.

In the embodiments of the present disclosure, a wording "at least one" represents a number of one or more, and "a plurality of" represents a number more than two. In addition, "at least one of the following (items)" or similar expressions thereof refers to any combination of these items, which may include any combination of a single item or multiple items. For example, at least one of A, B, or C may represent: A, or B, or C; A and B, or A and C, or B and C; or A, B and C. Herein, each of A, B, and C may be an element itself or may be a set containing one or more elements.

In the embodiments of the present disclosure, "example/exemplary/exemplarily", "in some embodiments", "in another embodiment", etc., are used to indicate as examples, illustrations, or explanations. Any embodiment or design solution described in the present disclosure as "example/exemplary/exemplarily" should not be illustrated as being more preferred or advantageous over other embodiments or design solutions. Specifically, the use of the term "example/exemplary/exemplarily" is intended to present relevant concepts in a concrete way.

The terms "of", "corresponding/relevant", and "corresponding" in the embodiments of the present disclosure may sometimes be used interchangeably. It should be noted that the intended meaning is consistent without emphasizing their differences. In the embodiments of the present disclosure, communication and transmission may sometimes be mixed, and it should be noted that their meanings are consistent in a case where their differences are not emphasized. For example, transmission/transmit may include sending and/or receiving, which may be a noun or a verb.

In the embodiments of the present disclosure, the term "equal to" may be used in conjunction with "greater than" and is applicable to technical solutions used in a case of "greater than", or the term "equal to" may be used in conjunction with "less than" and is applicable to technical solutions used in a case of "less than". It should be noted that in a case where "equal to" is used in conjunction with "greater than", it cannot be used in conjunction with "less than"; in a case where "equal to" is used in conjunction with "less than", it cannot be used in conjunction with "greater than".

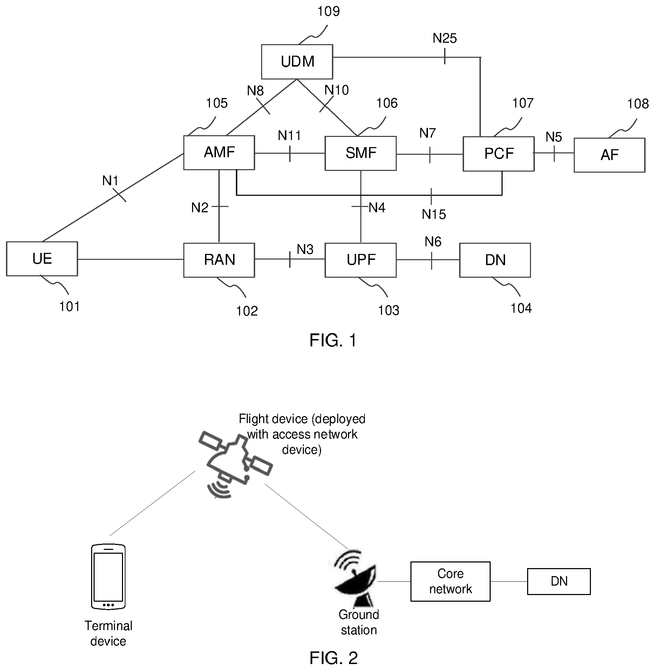

Before introducing the communication system of the embodiments of the present disclosure, network elements involved in the embodiments of the present disclosure are first introduced with reference to the 5th generation (5G) system shown in FIG. 1.

As shown in FIG. 1, the system may be divided into two parts: an access network and a core network. The access network is used to implement functions related to radio access, mainly including a radio access network (RAN) device 102. The core network mainly includes following several key logical network elements: a user plane function (UPF) 103, an access and mobility management function (AMF) 105, a session management function (SMF) 106, a policy control function (PCF) 107, and a unified data management (UDM) 109. The system 100 may further include a user equipment (UE) 101, a data network (DN) 104, and an application function (AF) 108. Interfaces between the network elements are as shown in FIG. 1. It should be understood that network elements may also communicate with each other using service-based interfaces. Herein, a network element deployed in the core network may be referred to as a core network device. A device deployed in the access network may be referred to as an access network device.

A UE may also be referred to as a terminal device. A terminal device may communicate with one or more core networks (CNs) via a RAN device. A terminal device may be referred to as an access terminal, a terminal, a user unit, a user station, a mobile radio station, a mobile station, a remote station, a remote terminal, a mobile device, a user terminal, a wireless network device, a user agent, or a user apparatus. A terminal may be a cellular phone, a cordless phone, a session initiation protocol (SIP) phone, a wireless local loop (WLL) station, a personal digital assistant (PDA), a handheld device with wireless communication function, a computing device or other device connected to a wireless modem, a vehicle-mounted device, a wearable device, or a terminal device in the Internet of Things or Vehicle to Everything, and any form of terminal device in future networks. The terminal device may also be a virtual reality (VR) terminal device with a wireless transceiver function, an augmented reality (AR) terminal device, a wireless terminal device in industrial control, a wireless terminal device in self-driving, a wireless terminal device in remote medical, a wireless terminal device in a smart grid, a wireless terminal in transportation safety, a wireless terminal device in a smart city, or a wireless terminal in a smart home. The terminal device may be deployed on land, including indoors or outdoors, hand-held or vehicle-mounted; may also be deployed on water surfaces (e.g., on ships); or may be deployed in the air (e.g., on airplanes, balloons, and satellites).

A RAN device is a device that accesses a terminal device to a wireless network, and may specifically be a base station. A base station may include various forms of base stations, for example: a macro base station, a micro base station (also referred to as a small station), a relay station, an access point, etc. Specifically, it may be: an access point (AP) in a wireless local area network (WLAN), a base station (BTS) in a global system for mobile communications (GSM) or code division multiple access (CDMA), a base station (NodeB) in wideband code division multiple access (WCDMA), an evolved Node B (eNB or eNodeB) in LTE (long term evolution), or a relay station or access point, or a vehicle-mounted device, a wearable device, and a next generation Node B (gNB) in a 5G system.

A UDM has functions such as managing subscription data of a user and generating authentication information of a user.

An AMF is mainly responsible for functions such as UE registration management, UE connection management, UE reachability management, UE access authorization and access authentication, UE security functions, UE mobility management, network slice selection, and SMF selection, etc.

An SMF is mainly responsible for all control plane functions of UE session management, including UPF selection and control, Internet Protocol (IP) address allocation and management, session quality of service (QoS) management, and acquisition for policy and charging control (PCC) policies from a PCF. The SMF also serves as a termination point for an SM (session management) part in a non-access stratum (NAS) message.

A PCF has functions such as providing policy rules to a control plane function entity.

An AF may be an application server, which may belong to an operator or a third party.

UPF is mainly responsible for processing user packets, such as forwarding, charging, etc., and may serve as an anchor point for a protocol data unit (PDU) session connection, responsible for data packet filtering, data transmission/forwarding, rate control, charging information generation, user plane QoS processing, uplink transmission authentication, transmission level verification, downlink data packet buffering, and downlink data notification triggering for UE.

DN is a network that provides data transmission services (e.g., IP Multi-media service (IMS), Internet, etc.) for users. DN may include an application server (AS). AS is a software framework that provides an environment for running an application, used to provide services (such as security, data, transaction support, load balancing, and large-scale distributed system management) for the application. UE acquires application messages by communicating with the AS. It should be noted that the above AF is the control plane of the AS.

The method provided in the embodiments of the present disclosure may be applied to a non-terrestrial networks (NTN) communication system. As shown in FIG. 2, the communication system may include a terminal device, a flight device (e.g., a satellite), a ground station (also referred to as a gateway station, gateway), a core network, and DN. In FIG. 2, the flight device is a satellite as an example. In the embodiments of the present disclosure, an access network device may be deployed in the flight device, and the core network may be deployed in a ground network. The ground network may be understood as a network on the Earth surface, which may include at least one of land, ocean, and low altitude. For example, network elements in the ground network may be deployed on land, ocean, or low altitude.

The terminal device in the embodiments of the present disclosure may be a terminal device on land, ocean, or low altitude, for example, a terminal device on an aircraft, a terminal device on a ship, etc., which is not limited in the present disclosure.

The flight device in the embodiments of the present disclosure may be a satellite, an aircraft, an airship, a balloon, an airplane, etc., which is not limited in the present disclosure.

In one implementation, if the flight device is a satellite, the satellite may be a geostationary earth orbit (GEO) satellite, or may be a medium earth orbit (MEO) satellite, a low earth orbit (LEO) satellite, a high earth orbit (GEO) satellite on non-geostationary earth orbit (NGEO), or a high altitude platform station (HAPS), etc. A specific type of the satellite is not limited in the present disclosure.

The ground station in the embodiments of the present disclosure may be used to connect a satellite and a network element in a ground network. A communication link between a ground station and a satellite may be referred to as a feeder link (or response link); a communication link between a satellite and a terminal device may be referred to as a service link.

It can be understood that FIG. 2 only shows one satellite and one ground station. In practical use, a multi-satellite and/or multi-ground station architecture may be adopted as needed. Herein, each satellite may provide service to one or more terminal devices, each satellite may correspond to one or more ground stations, each ground station may correspond to one or more satellites, etc., which is not specifically limited in the present disclosure.

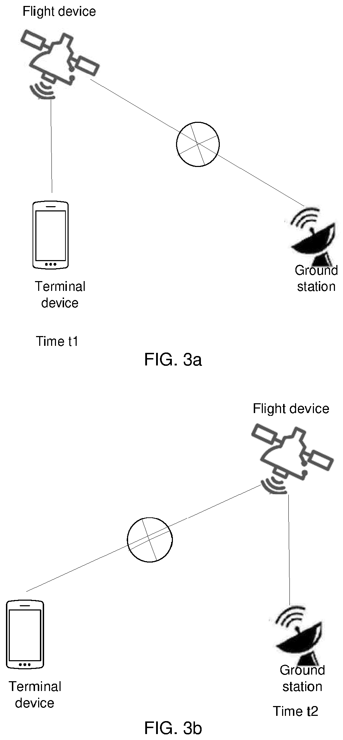

Since the flight device (e.g., a satellite) moves continuously, a relative position between the flight device and a terminal device or a ground station changes continuously. For example, as shown in FIG. 3a, at time t1, the flight device (e.g., a satellite) is overhead the terminal device, the service link between the flight device (e.g., the satellite) and the terminal device is available, a communication device on the flight device may communicate with the terminal device, but the feeder link between the flight device (e.g., the satellite) and the ground station is unavailable. At time t2, as shown in FIG. 3b, the flight device (e.g., a satellite) is overhead the ground station, the feeder link between the flight device (e.g., the satellite) and the ground station is available, the communication device on the flight device may communicate with the ground station, but the service link between the flight device (e.g., the satellite) and the terminal device is unavailable. Herein, the time t2 may be after the time t1.

The following explains some terms involved in the embodiments of the present disclosure to facilitate understanding by those skilled in the art.

### 1. Satellite constellation

A satellite constellation is a set of satellites that are launched into an orbit and are capable of working normally. It is usually a satellite network composed of some satellites configured in a certain way. Multiple satellites belonging to the same satellite constellation may communicate with each other and perform information transmission.

### 2. Ephemeris data

Ephemeris, also known as ephemeris table, calendar, almanac, etc., is information used to locate positions of celestial bodies at any time. A terminal device may search for a network based on satellite ephemeris data, thereby improving user experience. Satellite ephemeris mainly includes orbital plane parameters and satellite level parameters. It should be understood that in the embodiments of the present disclosure, the satellite ephemeris may also be referred to as ephemeris parameters, satellite ephemeris parameters, or other possible names, which is not limited in the present disclosure.

It should be noted that, in the following embodiments, storing first information in a first communication apparatus may also be understood as storing the first information in the flight device, and the flight device may be a satellite.

### 3. Timer

In the embodiments of the present disclosure, a timer is configured to supervise a communication process. For example, in a case where a communication apparatus sends a message, the timer is initiated. In a case where a response message is received before the timer expires, the timer is stopped. In a case where the timer expires and no response message is received, it is considered that the communication fails, and the communication process may be retransmitted or terminated.

Taking a terminal device sending a registration request to an AMF as an example, the timer of the terminal device is T3510.

In a case where the terminal device sends a registration request, the timer T3510 is initiated. In a case where a registration received response message or a registration reject response message sent from the AMF is received before the timer T3510 expires, the terminal device stops the timer T3510 upon receiving the registration received response message or the registration reject response message. In a case where the timer T3510 expires and no response message is received, it is considered that the communication fails.

Taking an AMF sending a registration received response message to a terminal device as an example, the timer of the AMF is T3550.

After the AMF receives the registration request sent from the terminal device, in a case where the terminal device is allowed to register, the AMF sends a registration received response message to the terminal device and initiates the timer T3550. In a case where a registration completion message is received from the terminal device before the timer T3550 expires, the AMF may stop timer T3550 upon receiving the registration completion message. In a case where the timer T3550 expires and still does not receive the registration completion message from the terminal device, it is considered that the communication fails.

It should be noted that the various technical solutions (or referred to as various embodiments) of the present disclosure may be implemented independently or may be implemented in combination based on some inherent relationship, which is not limited in the present disclosure. And various terms and definitions between the various embodiments may reference each other. In each embodiment of the present disclosure, different implementations may also be combined or implemented independently.

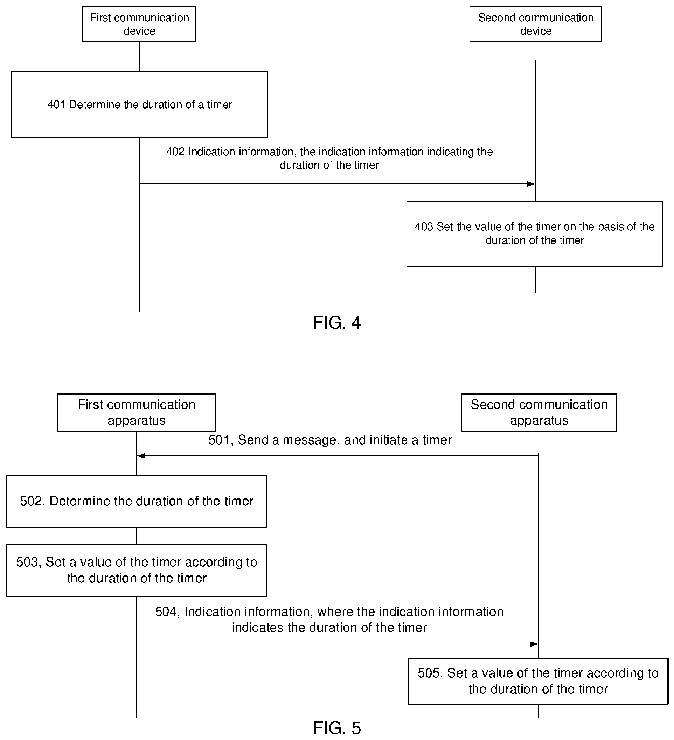

Referring to FIG. 4, FIG. 4 is a flowchart of a method for indicating a duration of a timer provided in the embodiments of the present disclosure. As shown in FIG. 4, the method for indicating the duration of the timer in this embodiment may include some or all of the following steps.

In 401, a first communication apparatus determines a duration of a timer, and the duration of the timer includes a storage duration for uplink information and/or downlink information on a flight device, the uplink information and/or the downlink information is information that needs to be transmitted during an operating process of the timer.

In some embodiments, the uplink information may refer to information sent from a terminal device to a network, and the downlink information may refer to information sent from the network to the terminal device. The uplink information and/or downlink information is information to be transmitted during the operating process of the timer. In other words, the timer is configured to supervise whether the uplink information and/or downlink information is successfully transmitted or whether there is transmission. Exemplarily, taking uplink transmission as an example, in a case where a terminal device sends uplink information, a timer is initiated. If downlink information corresponding to the uplink information is received before the timer expires, the timer is stopped. If the timer expires and no downlink information corresponding to the uplink information is received, it is considered that the communication fails. Exemplarily, taking downlink transmission as an example, a network element or device in a network sends downlink information, a timer is initiated. If uplink information corresponding to the downlink information is received before the timer expires, the timer is stopped. If the timer expires and no uplink information corresponding to the downlink information is received, it is considered that the communication fails. Herein, the downlink information corresponding to the uplink information may be understood as the downlink information being response information to the uplink information, and the uplink information corresponding to the downlink information may be understood as the uplink information being response information to the downlink information.

For example, a terminal device sends a registration request to a network, where the registration request is the uplink information, and a response message for the registration request sent from the network to the terminal device is the downlink information, and the response message may be a registration received response message or a registration reject response message. It can be understood that due to network reasons, the response message (i.e., the downlink information) may not be transmitted, or the transmission may not be successful, or the transmission may be delayed, which may cause the terminal device to not receive the response message during the operating process of the timer, the timer expires, and the terminal device determines that communication fails. That is, the timer may supervise whether the registration request and the response message are transmitted within the duration of the timer. For example, in the network, the AMF sends a registration reception response message to the terminal device as downlink information, and the terminal device sends a registration completion message to the AMF as uplink information. The information that needs to be transmitted during the operation of the timer can also be the registration reception response message (downlink information) and the registration completion message (uplink information), that is, the timer can supervise whether transmission for the registration received response message and the registration completion message is completed within the duration of the timer.

In the embodiments of the present disclosure, some network elements or devices in the network may be deployed in the flight device. Since a communication link between the flight device and the terminal device or the ground station may be interrupted, thus to cause the uplink information and/or downlink information to be stored in the flight device. For example, an access network device is deployed in a flight device, and a core network is deployed in a ground network. A terminal device needs to send a registration request to an AMF. The terminal device first needs to send the registration request to the access network device in the flight device. If the communication link between the flight device (which may also be replaced by the access network device) and the ground station is unavailable, then the registration request needs to be stored in the access network device in the flight device. In a case where the communication link between the flight device (which may also be replaced by the access network device) and the ground station is available, the stored registration request is sent to the AMF via the ground station. After the AMF receives the registration request, the AMF may send a response message (for example, a registration received response message or a registration reject response message) to the terminal device. Exemplarily, the AMF sends the response message to the access network device in the flight device. Since the communication link between the flight device (which may also be replaced by the access network device) and the terminal device is unavailable, the response message needs to be stored in the access network device in the flight device. In a case where the communication link between the flight device (which may also be replaced by the access network device) and the terminal device is available, the stored response message is sent to the terminal device. In a process from the terminal device sending the registration request to receiving the response message, the uplink information (for example, the registration request) and the downlink information (for example, the response message) need to be stored in the flight device for a period of time. To improve the communication success rate, the duration of the timer needs to include a storage duration for the uplink information and/or the downlink information in the flight device. For example, the duration of the timer needs to include the storage duration for the registration request and the response message in the flight device, thereby improving the accuracy of the determined duration of the timer. It can be understood that in some implementations, it may be that the uplink information or downlink information is stored in the flight device. For example, in a case where the terminal device sends the registration request, the registration request is stored in the flight device, but the response message corresponding to the registration request may not be stored in the flight device. That is, after the access network device in the flight device receives the response message and determines that the communication link between the flight device and the terminal device is available, the response message is sent to the terminal device.

In the embodiments of the present disclosure, the duration of the timer determined by the first communication apparatus may include the storage duration for the uplink information and/or the downlink information in the flight device (which may be replaced by the access network device), so as to avoid setting the duration of the timer too short, which may cause a communication failure due to timer expiration caused by the storage duration in the flight device, thereby improving the communication success rate.

The first communication apparatus in the embodiments of the present disclosure is an apparatus for determining the duration of the timer.

In a possible implementation, the first communication apparatus may be a network element in the core network. That is, the network element in the core network determines the duration of the timer. For example, the first communication apparatus may be an AMF, a PCF, or a newly added network function (NF), etc.

In another possible implementation, the first communication apparatus may be an access network device. That is, the access network device determines the duration of the timer. For example, it may be a RAN deployed in the flight device.

In yet another possible implementation, the first communication apparatus may be a terminal device. That is, the terminal device determines the duration of the timer.

The uplink information in the embodiments of the present disclosure may be uplink data, uplink control information, uplink control signaling, or an uplink reference signal, etc. The downlink control information may be downlink data, downlink control information, downlink control signaling, or a downlink reference signal, etc.

In 402, the first communication apparatus sends indication information to a second communication apparatus, the indication information indicates the duration of the timer. Correspondingly, the second communication apparatus receives the indication information.

After determining the duration of the timer, the first communication apparatus may indicate the duration of the timer to the second communication apparatus, for example, indicating the duration of the timer through the indication information. Exemplarily, the indication information may include an index value and a time unit, and the index value indicates a number of time units contained in the duration of the timer. Exemplarily, one index value may correspond to a number. For example, an index value 1 corresponds to a number of 2, an index value 2 corresponds to a number of 3, and the time unit may be minute, hour, etc. For example, if the duration of the timer is 2 hours and the time unit is hour, then index value 1 indicates a number of 2.

The second communication apparatus includes at least one of: an AMF network element, an SMF network element, a PCF network element, a terminal device, or a UPF network element, etc.

In a possible implementation, the first communication apparatus is an AMF, and the second communication apparatus may be a terminal device, or an SMF, or a UPF, or a PCF. It can be understood that for network elements that have a direct interface with the AMF, such as SMF and PCF, the AMF may directly send the indication information to the SMF and the PCF. For a network element that does not have a direct interface with the AMF, the AMF may indirectly send the indication information to the network element that does not have the direct interface through another network element. For example, in a case where the second communication apparatus is a UPF, the AMF may send the indication information to the UPF via the SMF. In a case where the second communication apparatus is the terminal device, AMF may send the indication information to the terminal device through a NAS signaling or a user plane message via the access network device. The NAS signaling includes one of: an identity request, an authentication request, a registration response, a downlink (DL) NAS transport, a configuration update message for the terminal device, a short message.

In another possible implementation, the first communication apparatus is an access network device, and the second communication apparatus may be a network element in the core network. For example, the second communication apparatus is an AMF network element, an SMF network element, a PCF network element, or a UPF network element, etc. Alternatively, the second communication apparatus may also be a terminal device. In a case where the second communication apparatus is a terminal device, the access network device may send the indication information to the terminal device through a radio resource control (RRC) message, e.g., the indication information may be carried in a system message, and the system message may be a system information block (SIB) , such as SIB1, SIB2, etc.

In another possible implementation, the first communication apparatus is the terminal device, and the second communication apparatus may be an access network device or a network element in the core network. For example, in a case where the second communication apparatus is the AMF, the terminal device may send the indication information to the AMF through a registration request or a service request.

In 403, the second communication apparatus sets a value of the timer according to the duration of the timer.

The second communication apparatus determines the duration of the timer according to the received indication information, and sets the value of the timer according to the duration of the timer.

In one possible implementation, the value of the timer is updated to the duration of the timer indicated by the indication information. For example, in a case where the second communication apparatus determines that the timer is not in an operating state, then the value of the timer is updated to the duration of the timer indicated by the indication information.

In another possible implementation, a remaining operating duration of the operating timer is set as a difference between the duration of the timer indicated by the indication information and a duration that the timer already has operated. It can be understood that the timer may be initiated in a case where the second communication apparatus sends a message, for example, in a case where the second communication apparatus sends a NAS message, the timer may be initiated, and the NAS message includes a registration request or a service request, etc. In a case where the second communication apparatus initiates the timer, the value of the timer may be set to an initial value. For example, the initial value is 3 hours. In a case where the indication information is received and the second communication apparatus has not received a response message for the NAS message, the timer has already operated for 1 hour, and the indication information indicates 2 hours. Then the remaining operating duration of the operating timer is 2 hours - 1 hour = 1 hour. That is, the remaining operating duration of the timer is set to 1 hour. In a case where the timer expires, and no response message for the NAS message is received, the second communication apparatus determines that the communication fails.

The following example illustrates the method of the first communication apparatus determining the duration of the timer, and the flight device being a satellite is taken as an example.

The duration of the timer may be determined according to satellite information, and the satellite information includes information of a constellation associated with the satellite and/or operating information of the satellite. The operating information of the satellite may include at least one of: ephemeris data of the satellite, an orbital altitude of the satellite, an operating period of the satellite, a position of the satellite, or a working time of the satellite. In an implementation, the duration of the timer may be determined according to the operating information of the satellite. For example, the duration of the timer may be determined based on the operating period of the satellite. As can be seen from the description of FIG. 3a and FIG. 3b, in an operating period of satellite, transmission for the uplink information and downlink information may be completed, and the duration of the timer may be equal to an operating period. For example, the duration of the timer may be determined based on the operating period of the satellite and information of the constellation associated with the satellite, and the information of the constellation associated with the satellite includes at least one of: a number of satellites included in the constellation associated with the satellite, a number of satellites connected to a ground station in the constellation associated with the satellite, operating information of respective satellites included in the constellation associated with the satellite, and communication information between the satellites in the constellation associated with the satellite and the ground station, etc. In a case where the constellation associated with the satellite includes multiple satellites connected to a ground station, the duration of the timer may be shorter than one operating period.

In another implementation, the duration of the timer may be determined according to the information of the satellite and information of a third communication apparatus, where the information of the third communication apparatus may include information of a ground station and/or information of a terminal device.

Herein, the information of the ground station may include position information of the ground station and/or time information about the ground station being capable of receiving and sending information, and the information of the terminal device may include position information of the terminal device and/or time information about the terminal device being capable of receiving and sending information.

The position information of the ground station includes at least one of: a geographical position of the ground station, a height of the ground station, and a speed of the ground station; the time information about the ground station being capable of receiving and sending information includes an operating time of the ground station, time information of the ground station being capable of performing communication with a device on the satellite. The time information includes, for example, a starting time and a time of duration.

The position information of the terminal device includes at least one of: a geographical position of the terminal device or a speed of the terminal device; and the time information about the terminal device being capable of receiving and sending information includes at least one of: a time for periodic registration for the terminal device, a time for de-registration for the terminal device, power-saving information of the terminal device, a sleep time of the terminal device, time information of the terminal device being in a coverage area of the satellite, and time information of the terminal device being not in a coverage area of the satellite. The time information includes, for example, a starting time and a time of duration.

For example, in a case where the terminal device and the satellite move in the same direction, a time for the satellite to move again above the terminal device and successfully establish a communication link with the terminal device may be longer than an operating period of the satellite, that is, the duration of the timer may be longer than one operating period. For example, in a case where the terminal device has a sleep time, it is further necessary to successfully establish a communication link with the terminal device during a non-sleep time of the terminal device. Therefore, the duration of the timer may also consider a time for the terminal device being capable of receiving and sending information.

For example, in a case where the ground station moves in an opposite direction to the satellite, a time for the satellite to move above the ground station and successfully establish a communication link with the ground station may be shorter than one operating period of the satellite, that is, the duration of the timer may be shorter than one operating period. For example, in a case where the ground station stores an operating time, the satellite also needs to establish a communication link with the ground station during the operating time of the ground station. Therefore, the duration of the timer may also consider the operating time of the ground station.

The information of the satellite and/or the information of the ground station used to determine the duration of the timer are from an application server and/or an operation management function network element, and the information of the terminal device is from at least one of the terminal device, the application server, or the operation management function network element.

Referring to FIG. 5, FIG. 5 is a flowchart of another method for indicating a duration of a timer provided in the embodiments of the present disclosure. As shown in FIG. 5, the method for indicating the duration of the timer in this embodiment may include some or all of the following steps.

In 501, a second communication apparatus sends a message and initiates a timer, where an initial value of the timer is a default value or a pre-configured value.

The step 501 of the present embodiment may be an optional step.

In a case where the second communication apparatus sends the message, the timer is initiated, and the initial value of the timer is the default value or may be a pre-configured value, for example, the network device pre-configures the initial value through a signaling.

In one possible implementation, the initial value may be determined based on at least one of a network identifier selected by the second communication apparatus, an access technology for the satellite, and an operating mode of a network where the satellite is located. For example, the second communication apparatus stores a corresponding relationship between at least one of the network identifier, the access technology for the satellite, or the operating mode of the network where the satellite is located and the initial value, and the corresponding relationship may be pre-configured. For example, a network identifier, an access technology for the satellite, and a network operating mode correspond to an initial value. The second communication apparatus may determine a corresponding initial value according to the selected network identifier, the access technology for the satellite of the selected network, and the operating mode of the network where the satellite of the selected network is located.

For example, the network identifier may be a public land mobile network (PLMN) identifier.

The access technology for the satellite may include at least one of: low orbit satellite access, medium orbit satellite access, or high orbit satellite access. The operating mode of the network where the satellite is located may include a store-and-forward mode or a non store-and-forward mode (also referred to as a real-time service mode). Herein, in the store-and-forward mode, in a case where the satellite is not capable of communicating with a ground station or a terminal device, uplink information and/or downlink information may be stored in an access network device in the satellite, and in a case where the satellite is capable of communicating with the ground station or the terminal device, the stored uplink information and/or downlink information is forwarded to the ground station or the terminal device. In the non store-and-forward mode (also referred to as the real-time service mode), after the access network device in the satellite receives the uplink information, in a case where the communication link between the satellite and the ground station is available, the access network device sends the uplink information to the ground station; in a case where the communication link between the satellite and the ground station is unavailable, the access network device does not store the uplink information, but discards the uplink information. Similarly, for downlink information, in the non store-and-forward mode, after the access network device in the satellite receives the downlink information, in a case where the communication link between the satellite and the terminal device is available, the access network device sends the downlink information to the terminal device; in a case where the communication link between the satellite and the terminal device is unavailable, the access network device does not store the downlink information, but discards the downlink information.

The operating mode of the network where the satellite is located is an initial value of the timer corresponding to the store-and-forward mode being greater than an initial value of the timer corresponding to the non store-and-forward mode. In the embodiments of the present disclosure, in a case where the second communication apparatus initiates the timer, the set initial value of the timer is the initial value corresponding to the store-and-forward mode.

For example, the second communication apparatus is a terminal device, and the message sent from the second communication apparatus may be a NAS message, such as a registration request or a service request. The terminal device may send the NAS message to the access network device in the satellite, then the NAS message is sent to the ground station by the access network device, and the ground station forwards it to the corresponding network element, such as an AMF, and the AMF sends a response message corresponding to the NAS message.

In one possible implementation, the message may include information of the terminal device, where the information of the terminal device is used to determine the duration of the timer.

In 502, a first communication apparatus determines the duration of the timer, and the duration of the timer includes a storage duration for the uplink information and/or downlink information on a flight device, the uplink information and/or the downlink information is information that needs to be transmitted during an operating process of the timer.

The step 502 in the embodiments of the present disclosure may store step 401 in the embodiments shown in Figure 4, which will not be repeated herein.

In 503, the first communication apparatus sets a value of the timer according to the duration of the timer.

The step 503 of the present embodiment may be an optional step.

After the first communication apparatus determines the duration of the timer, the first communication apparatus may set the value of the timer according to the duration of the timer.

In one possible implementation, the value of the timer of the first communication apparatus is updated to the determined duration of the timer. For example, in a case where the timer of the first communication apparatus is not in an operating state, the value of the timer is updated to the determined duration of the timer.

In another possible implementation, a remaining operating duration of the operating timer of the first communication apparatus is set as a difference between the duration of the timer indicated by the indication information and a duration that the timer of the first communication apparatus already has operated.

In 504, the first communication apparatus sends indication information to the second communication apparatus, where the indication information indicates the duration of the timer. Correspondingly, the second communication apparatus receives the indication information.

In 505, the second communication apparatus sets a value of the timer according to the duration of the timer.

The second communication apparatus determines the duration of the timer according to the indication information, and sets a value of the timer of the second communication apparatus according to the duration of the timer; for example, in a case where the timer of the second communication apparatus is not in an operating state, e.g., the second communication apparatus has received a response message corresponding to a message in step 501, the value of the timer of the second communication apparatus is updated to the duration of the timer indicated by the indication information; or in a case where the timer of the second communication apparatus is in an operating state, e.g., the second communication apparatus has not received a response message corresponding to the message in step 501 and the timer of the second communication apparatus has not expired, a remaining operating duration of the operating timer is set to a difference between the duration of the timer indicated by the indication information and a duration that the timer of the second communication apparatus already has operated.

Descriptions for steps 504 to 505 in the embodiments of the present disclosure may refer to the descriptions for steps 402 to 403, which will not be repeated herein.

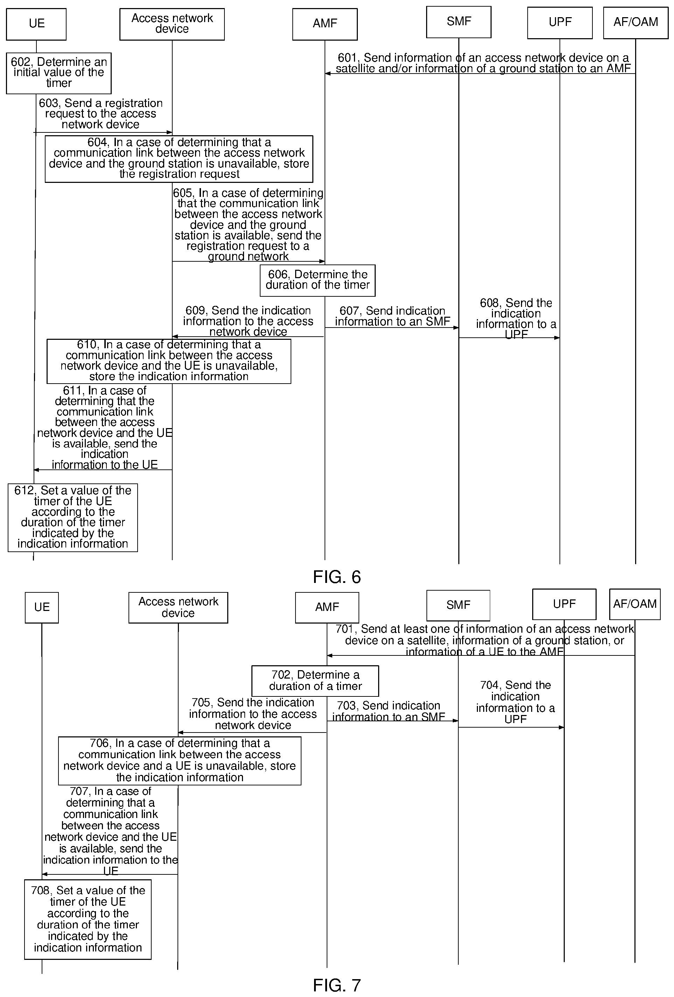

Several scenarios in the embodiments of the present disclosure are described below by way of example with reference to FIG. 6 to FIG. 9.

Referring to FIG. 6, FIG. 6 is an example of a scenario for a method for indicating a duration of a timer provided in the embodiments of the present disclosure. In FIG. 6, determining a duration of a timer by a network element AMF in the core network is taken as an example, and an execution order of the following steps is not limited.

In 601, an AF/OAM (Operations, Administration, and Maintenance) sends information of an access network device on a satellite and/or information of a ground station to an AMF.

The information of the access network device on the satellite may also be referred to as satellite information. Specific descriptions for the satellite information, the information of ground station may refer to the description in the previous embodiments, which will not be repeated herein.

In 602, the UE determines an initial value of the timer.

The initial value of the timer is a default value or may be a pre-configured value. The initial value may be determined based on at least one of the network identifier selected by the UE for access, the access technology for the satellite, and the operating mode of the network where the satellite is located. The relevant descriptions for step 602 may refer to the relevant descriptions of step 501 in the aforementioned embodiments of FIG. 5, which will not be repeated herein.

In 603, the UE sends a registration request to the access network device and initiates the timer, and a value of the timer is the initial value.

Alternatively, the UE may send a service request or other NAS signaling to the access network device, which is not limited in the present disclosure. The UE sends a registration request to the access network device on the satellite. For example, a RRC connection is established between the UE and the access network device, and the UE sends a registration request to the access network device.

In 604, in a case of determining that a communication link between the access network device and the ground station is unavailable, the access network device stores the registration request.

The access network device may store the registration request, and a duration for which the access network device stores the registration request may be determined based on satellite information and information of the ground station.

In 605, in a case of determining that the communication link between the access network device and the ground station is available, the access network device sends the registration request to a ground network.

In a case where the communication link between the access network device and the ground station is available, the access network device may send the stored registration request to the ground station, and send the registration request to the AMF via the ground station.

In 606, the AMF determines the duration of the timer.

The AMF may determine the duration of the timer based on at least one of the information of the access network device, the information of a ground station, or the information of the terminal device acquired in step 601. Specific determination manners may refer to the descriptions in the foregoing embodiments, which will not be repeated herein. The information of the terminal device may from the terminal device, for example, may be carried in the registration request, or the information of the terminal device may from an AF or an OAM.

In some implementations, the AMF may set a value of a timer of the AMF according to the determined duration of the timer. For example, the AMF may set the value of the timer to the determined duration of the timer, or the AMF may set the value of the timer to a remaining operating duration, where the remaining operating duration is a difference between the duration of the timer indicated by indication information and a duration that the timer of the AMF already has operated.

In 607, the AMF sends indication information to an SMF, and the indication information indicates the duration of the timer.

Correspondingly, the SMF receives the indication information. The SMF may also set the value of the timer of the SMF based on the duration of the timer indicated by the indication information. For example, the SMF may set the value of the timer of the SMF to the determined duration of the timer, or the SMF may set the remaining operating duration of the operating timer of the SMF to the difference between the duration of the timer indicated by the indication information and the duration that the timer of the SMF already has operated.

In 608, the SMF sends the indication information to a UPF.

Correspondingly, the UPF receives the indication information. The UPF may also set the value of the timer of the UPF based on the duration of the timer indicated by the indication information. For example, the UPF may set the value of the timer to the duration of the timer indicated by the indication information, or the UPF may set the remaining operating duration of the operating timer to the difference between the duration of the timer indicated by the indication information and the duration that the timer of the UPF already has operated.

In 609, the AMF sends the indication information to the access network device.

The AMF may send the indication information to the UE through a NAS signaling. Specifically and optionally, the AMF sends a NAS signaling carrying the indication information to the access network device, and then the access network device sends it to the UE. The relevant description for the NAS signaling may refer to the descriptions of step 402 in FIG. 4, which will not be repeated herein.

In 610, in a case of determining that a communication link between the access network device and the UE is unavailable, the access network device stores the indication information.

In 611, in a case of determining that the communication link between the access network device and the UE is available, the access network device sends the indication information to the UE.

In a case where the communication link between the access network device and the UE is unavailable, i.e., a service link between the satellite and the UE is unavailable, the access network device may store the indication information. And in a case where the communication link between the access network device and the UE is available, the access network device sends the stored indication information to the UE. Specifically and optionally, after establishing an RRC connection between the UE and the access network device, the indication information may be sent to one or more UEs through a mode of unicast or broadcast. The indication information may be carried in an RRC signaling, such as carried in a system message, and the system message may be a system information block (SIB), such as SIB1, SIB2, etc.

In 612, the UE sets a value of the timer of the UE according to the duration of the timer indicated by the indication information.

In a case where the timer of the UE is not in an operating state, for example, the UE has received a response message corresponding to the registration request in step 603, the value of the timer of the UE is updated to the duration of the timer indicated by the indication information. Alternatively, in a case where the timer of the UE is in an operating state, for example, the UE has not received a response message corresponding to the registration request in step 603 and the timer of the UE has not expires, the remaining operating duration of the operating timer is set to the difference between the duration of the timer indicated by the indication information and the duration of the timer that already has operated.

Referring to FIG. 7, FIG. 7 is another example of a scenario for a method for indicating a duration of a timer provided in the embodiments of the present disclosure. In FIG. 7, determining a duration of a timer by a network element AMF in the core network is still taken as an example, and an execution order of the following steps is not limited.

In 701, an AF/OAM sends at least one of information of an access network device on a satellite, information of a ground station, or information of a UE to the AMF.

The information of the access network device on the satellite may also be referred to as satellite information. Specific descriptions for the satellite information, the information of ground station, and the information of UE may refer to the description in the previous embodiments, which will not be repeated herein.

In 702, the AMF determines a duration of a timer.

The AMF may determine the duration of the timer based on at least one of the satellite information, the information of the ground station, and the information of the UE acquired in step 701.

In 703, the AMF sends indication information to an SMF, and the indication information indicates the duration of the timer.

In 704, the SMF sends the indication information to a UPF.

In 705, the AMF sends the indication information to the access network device.

In 706, in a case of determining that a communication link between the access network device and a terminal device is unavailable, the access network device stores the indication information.

In 707, in a case of determining that a communication link between the access network device and the terminal device is available, the access network device sends the indication information to the UE.

Descriptions for steps 703 to 707 in the embodiments of the present disclosure may refer to the descriptions for steps 607 to 611, which will not be repeated herein.

In 708, the UE sets a value of the timer of the UE according to the duration of the timer indicated by the indication information.

In response to that the timer of the UE is not operating, the value of the timer of the UE is upated to the duration of the timer indicated by the indication information.

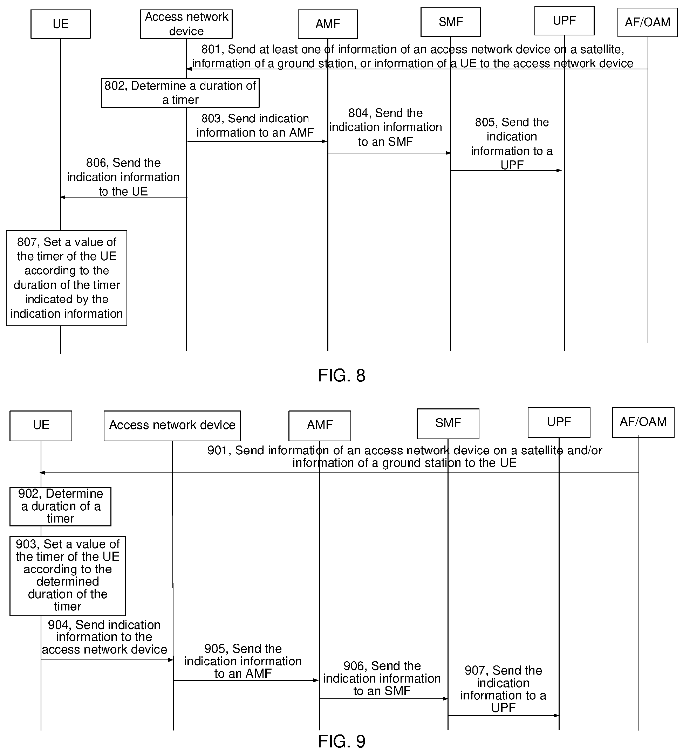

Referring to FIG. 8, FIG. 8 is yet another example of a scenario for a method for indicating a duration of a timer provided in the embodiments of the present disclosure. In FIG. 8, determining a duration of a timer by an access network device is still taken as an example, and an execution order of the following steps is not limited.

In 801, an AF/OAM sends at least one of information of an access network device on a satellite, information of a ground station, or information of a UE to the access network device.

In 802, the access network device determines a duration of a timer.

The access network device may determine the duration of the timer based on at least one of the satellite information, the information of the ground station, and the information of the UE acquired in step 801.

In 803, the access network device sends indication information to an AMF, and the indication information indicates the duration of the timer.

After the access network device determines the duration of the timer, the access network device may send the indication information to a network element in the core network, and the indication information indicates the duration of the timer. For example, the access network device may send the indication information to AMF.

In 804, the AMF sends the indication information to an SMF.

In 805, the SMF sends the indication information to a UPF.

Descriptions for steps 804 to 805 in the embodiments of the present disclosure may refer to the descriptions for steps 607 to 608, which will not be repeated herein.

In 806, the access network device sends the indication information to the UE.

In a case where a communication link between the access network device and a UE is available, the access network device may send the indication information to the UE to indicate the duration of the timer. Specifically and optionally, after establishing an RRC connection between the UE and the access network device, the indication information may be sent to one or more UEs through a mode of unicast or broadcast. The indication information may be carried in an RRC signaling, such as carried in a system message, and the system message may be a system information block (SIB), such as SIB1, SIB2, etc.

In 807, the UE sets a value of the timer of the UE according to the duration of the timer indicated by the indication information.

A manner of setting the value of the timer of the UE may refer to the description for step 612 in FIG. 6, which will not be repeated herein.

Referring to FIG. 9, FIG. 9 is yet another example of a scenario for a method for indicating a duration of a timer provided in the embodiments of the present disclosure. In FIG. 9, determining a duration of a timer by a UE is still taken as an example, and an execution order of the following steps is not limited.

In 901, an AF/OAM sends information of an access network device on a satellite and/or information of a ground station to the UE.

In 902, the UE determines a duration of a timer.

The UE may determine the duration of the timer based on at least one of the information of the access network device on the satellite (also known as satellite information), the information of the ground station, or information of the UE.

In 903, the UE sets a value of the timer of the UE according to the determined duration of the timer.

A manner of setting the value of the timer of the UE may refer to the description for step 612 in FIG. 6, which will not be repeated herein.

In 904, the UE sends indication information to the access network device, and the indication information indicates the duration of the timer.

After the UE determines the duration of the timer, the UE may send the indication information to a network element in the core network through a NAS signaling, for indicating the duration of the timer. For example, the indication information may be sent to a network element in the core network through a registration request or service request. Specifically and optionally, the UE may send the NAS signaling carrying the indication information to the access network device.

In 905, the access network device sends the indication information to an AMF.

After the access network device receives the NAS signaling carrying the indication information, the access network device may further send the NAS signaling to the AMF.

In 906, the AMF sends the indication information to an SMF.

In 907, the SMF sends the indication information to a UPF.

Descriptions for steps 906 to 907 in the embodiments of the present disclosure may refer to the descriptions for steps 607 to 608, which will not be repeated herein.

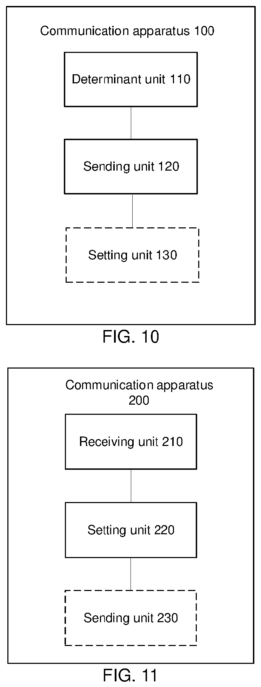

Referring to FIG. 10, FIG. 10 is a structural schematic diagram of a communication apparatus provided in the embodiments of the present disclosure. The communication apparatus may be a first communication apparatus, and the communication apparatus may be applied to a terminal device, an access network device, or a network element in the core network. For example, the communication device may be a terminal device, access network device, or a network element in the core network, or may be an apparatus in the terminal device, in the access network device, or in the network element in the core network. For example, the communication apparatus may be a chip or a chip module in the terminal device, in the access network device, or in the network element in the core network, or may be an apparatus that is capable of being matched and used with the terminal device, with the access network device, or with the network element in the core network. The communication apparatus 100 shown in FIG. 10 may include a determination unit 110 and a sending unit 120. Optionally, the communication apparatus 100 may further include a setting unit 130, where
the determination unit 110 is configured to determine a duration of a timer, where the duration of the timer includes a storage duration for uplink information and/or downlink information on a flight device, the uplink information and/or the downlink information is information that needs to be transmitted during an operating process of the timer; and
the sending unit 120 is configured to send indication information, where the indication information indicates the duration of the timer.

In one possible implementation, the communication apparatus 100 may further include the setting unit 130, which is configured to set a value of the timer according to the duration of the timer.

In one possible implementation, the method is applied to a first communication apparatus;
the first communication apparatus is a network element in a core network, or the first communication apparatus is an access network device, or the first communication apparatus is a terminal device.

In one possible implementation, the core network and the terminal device are deployed in a ground network, and the access network device is deployed in a satellite.

In one possible implementation, the sending unit 120 is further configured to send indication information to a second communication apparatus;
where the second communication apparatus includes at least one of: an access and mobility management function (AMF) network element, a session management function (SMF) network element, a policy control function (PCF) network element, a terminal device or user plane function (UPF) network element, an access network device, a unified data management (UDM), an authentication server function (AUSF), a mobility management entity (MME), a short message service center (SMSC), a serving-gateway, a packet data network (PDN) gateway.

In one possible implementation, the first communication apparatus is the AMF network element, the second communication apparatus is the terminal device, and the indication information is carried in a non-access stratum (NAS) signaling or a user plane message.

In one possible implementation, the NAS signaling includes one of: an identity request, an authentication request, a registration response, a downlink NAS transport, a configuration update message for the terminal device, a short message.

In one possible implementation, the indication information includes an index value and a time unit, where the index value indicates a number of time units included in the duration of the timer.

In one possible implementation, the flight device is a satellite, and the determination unit 110 is specifically configured to:
determine the duration of the timer according to satellite information, where the satellite information includes information of a constellation associated with the satellite and/or operating information of the satellite.

In one possible implementation, the operating information of the satellite includes at least one of: ephemeris data of the satellite, an orbital altitude of the satellite, an operating period of the satellite, a position of the satellite, or a working time of the satellite;
the information of the constellation associated with the satellite includes at least one of: a number of satellites included in the constellation associated with the satellite, a number of satellites connected to a ground station in the constellation associated with the satellite, operating information of respective satellites included in the constellation associated with the satellite, and communication information between the satellites in the constellation associated with the satellite and the ground station.

In one possible implementation, the determination unit 110 is specifically configured to:
determine the duration of the timer based on the satellite information and information of a third communication apparatus;
where the information of the third communication apparatus includes information of a ground station and/or information of a terminal device; the information of the ground station includes position information of the ground station and/or time information about the ground station being capable of receiving and sending information, and the information of the terminal device includes position information of the terminal device and/or time information about the terminal device being capable of receiving and sending information.

In one possible implementation, the position information of the ground station includes at least one of: a geographical position of the ground station, a height of the ground station, and a speed of the ground station; the time information about the ground station being capable of receiving and sending information includes an operating time of the ground station;
the position information of the terminal device includes at least one of: a geographical position of the terminal device or a speed of the terminal device; and the time information about the terminal device being capable of receiving and sending information includes at least one of: a time for periodic registration for the terminal device, a time for de-registration for the terminal device, power-saving information of the terminal device, and a sleep time of the terminal device.

In one possible implementation, the information of the satellite and/or the information of the ground station is from an application server and/or an operation management function network element, and the information of the terminal device is from the terminal device, or the application server, or the operation management function network element.

A specific implementation description for FIG. 10 may refer to the descriptions for FIG. 4 to FIG. 9, which will not be repeated herein.

Referring to FIG. 11, FIG. 11 is a structural schematic diagram of another communication apparatus provided in the embodiments of the present disclosure. The communication apparatus may be a second communication apparatus, and the communication apparatus may be applied to a terminal device, an access network device, or a network element in the core network. For example, the communication device may be a terminal device, access network device, or a network element in the core network, or may be an apparatus in the terminal device, in the access network device, or in the network element in the core network. For example, the communication apparatus may be a chip or a chip module in the terminal device, in the access network device, or in the network element in the core network, or may be an apparatus that is capable of being matched and used with the terminal device, with the access network device, or with the network element in the core network. The communication apparatus 200 shown in FIG. 11 may include a receiving unit 210 and a setting unit 220. Optionally, the communication apparatus 200 may further include a sending unit 230, where
the receiving unit 210 is configured to receive indication information, where the indication information indicates a duration of a timer, the duration of the timer includes a storage duration for uplink information and/or downlink information on a flight device, the uplink information and/or the downlink information is information that needs to be transmitted during an operating process of the timer; and
the setting unit 220 is configured to set a value of the timer according to the duration of the timer.

In one possible implementation, the indication information includes an index value and a time unit, where the index value indicates a number of time units included in the duration of the timer.

In one possible implementation, the setting unit 220 is specifically configured to update the value of the timer to the duration of the timer; or set a remaining operating duration of the timer as a difference between the duration of the timer and a duration that the timer already has operated.

In one possible implementation, the communication apparatus 200 may further include the sending unit 230, and the sending unit 230 is configured to send a message and initiate the timer, where an initial value of the timer is a default value or a pre-configured value.

In one possible implementation, the flight device is a satellite, and the initial value is determined based on at least one of a network identifier selected by the terminal device, an access technology for the satellite, and an operating mode of a network where the satellite is located;
the access technology includes one of: low orbit satellite access, medium orbit satellite access, or high orbit satellite access; the operating mode is a store-and-forward mode, where in the store-and-forward mode, in response to that the satellite is not capable of performing communication with a ground station or a terminal device, the uplink information and/or the downlink information is stored in a device in the satellite, and in response to that the satellite is capable of performing communication with the ground station or the terminal device, the stored uplink information and/or downlink information is forwarded to the ground station or the terminal device.

In one possible implementation, the indication information is carried in a non-access stratum (NAS) signaling or a user plane message.

A specific implementation description for FIG. 11 may refer to the descriptions for FIG. 4 to FIG. 9, which will not be repeated herein.

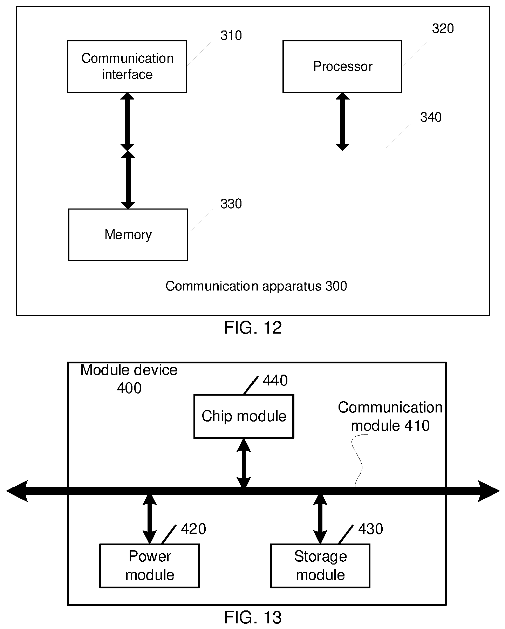

Referring to FIG. 12, FIG. 12 is a structural schematic diagram of a communication apparatus provided in the embodiments of the present disclosure, which is configured to implement functions of the first communication apparatus described in FIG. 4 to FIG. 9, or to implement functions of the second communication apparatus described in FIG. 4 to FIG. 9. The communication apparatus 300 may be a terminal device, an access network device, or a network element in the core network, or may be an apparatus configured for the terminal device, the access network device, or the network element in the core network. The apparatus configured for the terminal device, the access network device, or the network element in the core network may be a chip system or chip within the terminal device, access network device, or network element in the core network. Herein, the chip system may be composed of chips, or may include chips and other discrete assemblies.

The communication apparatus 300 includes at least one processor 320, which is configured to implement a data processing function of the first communication apparatus or the second communication apparatus described in the methods provided in the embodiments of the present disclosure. The communication apparatus 300 may also include a communication interface 310, which is configured to implement sending and receiving operations of the first communication apparatus or the second communication apparatus described in the methods provided in the embodiments of the present disclosure. In the embodiments of the present disclosure, the processor 320 may be a central processing unit (CPU), and the processor may also be other general-purpose processors, a digital signal processor (DSP), an application specific integrated circuit (ASIC), a field programmable gate array (FPGA) or other programmable logic devices, discrete gates or transistor logic devices, discrete hardware components, etc. A general-purpose processor may be a microprocessor, or the processor may also be any conventional processor, etc. In the embodiments of the present disclosure, the communication interface 310 may be a transceiver, a circuit, a bus, a module, or other types of communication interfaces, and may be configured to communicate with other devices through transmission media. For example, the communication interface 310 is configured for the communication apparatus 300 to communicate with other devices. The processor 320 uses the communication interface 310 to send and receive data, and is configured to implement the methods described in the embodiments of FIG. 4 to FIG. 9.

The communication apparatus 300 may further include at least one memory 330, which is configured to store program instructions and/or data. The memory 330 is coupled to the processor 320. "Coupling" in the embodiments of the present disclosure refers to an indirect coupling or communication connection between apparatuses, units, or modules, which may be in a form of electrical, mechanical, or other forms, used for information exchange between apparatuses, units, or modules. The processor 320 may operate in conjunction with the memory 330. The processor 320 may execute program instructions stored in the memory 330. At least one of the at least one memory may be included in the processor.

After the communication apparatus 300 is turned on, the processor 320 may read software programs in the memory 330, interpret and execute the instructions of the software programs, and process the data of the software programs. When data needs to be transmitted wirelessly, the processor 320 performs baseband processing on the data to be transmitted and outputs a baseband signal to a radio frequency circuit (not shown in FIG. 12). The radio frequency circuit processes the baseband signal and sends it out in the form of electromagnetic waves through an antenna. When data is sent to the communication apparatus 300, the radio frequency circuit receives a radio frequency signal through the antenna, converts the radio frequency signal into a baseband signal, and outputs the baseband signal to the processor 320. The processor 320 converts the baseband signal into data and processes the data.

In another implementation, the radio frequency circuit and the antenna may be set up independently from the processor 320 that performs baseband processing. For example, in a distributed scenario, the radio frequency circuit and the antenna may be arranged in a remote manner, which are independent from the apparatus.

A specific connection medium between the communication interface 310, processor 320, and memory 330 is not limited in the embodiments of the present disclosure. In FIG. 12 in the embodiments of the present disclosure, the memory 330, the processor 320, and the communication interface 310 are connected through a bus 340. The bus 340 is indicated by a thick line in FIG. 12. A connection manner between other components is only for illustrative purposes and is not limited. The bus may be classified as an address bus, a data bus, a control bus, etc. For ease of representation, only one bold line is used in FIG. 12 for representing the bus, but it does not mean that there is only one bus or one type of bus.

When the communication apparatus 300 is specifically configured for the terminal device, such as a chip or chip system, what the communication interface 310 outputs or receives is a baseband signal. When the communication apparatus 300 is a terminal device, what the communication interface 310 outputs or receives may be a radio frequency signal.

It should be noted that the apparatus may perform the relevant steps of the terminal device, access network device, or network element in the core network in the aforementioned method embodiments, details may refer to the implementations provided in the above steps, which will not be repeated herein.

For various apparatuses or products applied to or integrated into the apparatus, various modules included therein may be implemented by hardware such as a circuit, different modules may be located in the same component (e.g., a chip, a circuit module, etc.) or different components in the terminal device, or at least part of the modules may be implemented by software programs, where the software programs is run on a processor integrated inside the terminal device, and a remaining part (if any) of the modules may be implemented by hardware such as a circuit.

The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM), which is used as an external cache. By way of illustration and not limitation, many forms of random access memory (RAM) are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), and direct rambus random access memory (DR RAM).

A chip is provided in the embodiments of the present disclosure. The chip includes: a processor, and further optionally, the chip further includes a memory. Herein, a number of processors may be one or more, and a number of memories may be one or more. The processor may, by reading instructions and data stored in the memory, execute the methods shown in FIG. 4 to FIG. 9 and the steps executed in related implementations.

As shown in FIG. 13, FIG. 13 is a structural schematic diagram of a module device provided in the embodiments of the present disclosure. The module device 400 may perform relevant steps of the first communication apparatus in the foregoing method embodiments, or the module device 400 may perform relevant steps of the second communication apparatus in the foregoing method embodiments.

The module device 400 includes: a communication module 410, a power module 420, a storage module 430, and a chip module 440. Herein, the power module 420 is configured to provide electrical energy to the module device; the storage module is 430 configured to store data and/or instructions; the communication module is 410 configured to communicate with external devices; the chip module 440 is configured to invoke the data and/or instructions stored in the storage module 430. Combined with the communication module 410, the methods shown in FIG. 4 to FIG. 9 and the steps executed in the related implementation may be performed.

A computer-readable storage medium is further provided in the embodiments of the present disclosure. The computer-readable storage medium stores computer programs, and the computer programs include program instructions. When an electronic device executes the program instructions, the electronic device implements the steps executed by the first communication apparatus in the method shown in FIG. 4 to FIG. 9 described above, or implements the steps executed by the second communication apparatus in the method shown in FIG. 4 to FIG. 9 described above.

The computer-readable storage medium may be an internal storage unit of the first communication apparatus or the second communication apparatus described in any of the foregoing embodiments, such as a hard disk or memory of a device. The computer-readable storage medium may also be an external storage device of the terminal device or the network device, such as a plug-in hard disk, a smart media card (SMC), a secure digital (SD) card, a flash card, etc., provided on the device. Further, the computer-readable storage medium may also include both the internal storage unit of the terminal device or the network device and an external storage device. The computer-readable storage medium is configured to store the computer programs and other programs and data required by the terminal device or the network device. The computer-readable storage medium may further be configured to temporarily store data that has been output or is to be output. The computer-readable storage medium may be any available medium that may be accessed by the computer, or a data storage device, such as a server or a data center including one or more available media. An available medium may be a magnetic medium (e.g., a floppy disk, a hard disk, a magnetic tape), an optical medium (e.g., a digital video disc (DVD)), or a semiconductor medium. The semiconductor medium may be a solid state drive.

Regarding the various apparatuses and products described in the above embodiments, each module/unit included may be a software module/unit, or may be a hardware module/unit, or may be partly a software module/unit and partly a hardware module/unit. For example, for various apparatuses and products applied to or integrated into a chip, various modules/units included in them may be implemented in hardware such as circuits, or at least some modules/units may be implemented in software programs running on the processor integrated inside the chip, and the remaining (if any) modules/units may be implemented in hardware such as circuits. For various apparatuses and products applied or integrated into a chip module, various modules/units included in them may be implemented in hardware such as circuits. Different modules/units may be located in the same component (such as a chip, a circuit module, etc.) of the chip module or in different components, or at least some modules/units may be implemented in software programs that run on the processor integrated inside the chip module. The remaining (if any) modules/units may be implemented in hardware such as circuits. For various apparatuses and products applied or integrated into a data acquisition node, various modules/units included in them may be implemented in hardware such as circuits. Different modules/units may be located in the same component (such as a chip, a circuit module, etc.) or in different components of a terminal device, or at least some modules/units may be implemented in software programs that run on the processor integrated inside the data acquisition node. The remaining (if any) modules/units may be implemented in hardware such as circuits.

The above embodiments may be implemented in whole or in part by software, hardware, firmware, or any combination thereof. In a case of being implemented by software, the above embodiments may be implemented wholly or partially in the form of a computer program product. The computer program product includes one or more computer instructions or computer programs. In a case where the computer instructions or the computer program are loaded or executed on a computer, the processes or functions described in the embodiments of the present disclosure are generated wholly or partially. The computer may be a general-purpose computer, a dedicated computer, a computer network, or any other programmable apparatuses. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired or wireless means.

It should be understood that, in the various embodiments of the present disclosure, orders of the sequence numbers of the above-mentioned processes do not mean an order of execution, the order of execution of the processes shall be determined by their functions and inherent logic, and shall not constitute any limitation on the implementation processes of the embodiments of the present disclosure.

In the several embodiments provided in the present disclosure, it should be understood that the disclosed methods, apparatuses and systems may be implemented in other ways. For example, the apparatus embodiments described above are only illustrative. For example, the division of the units is only a logical function division, and there may be other division methods for actual implementation. For example, multiple units or components can be combined or integrated into another system, or some features may be ignored or may not be executed. On the other hand, the coupling or direct coupling or communicative connection with each other as shown or discussed may be indirect coupling or communicative connection of apparatus or units via some interfaces, which may be electrical, mechanical, or in other forms.

The units described as separate components may be or may not be physically separated, and the components shown as units may be or may not be physical units, is, they may be located in one place or distributed across multiple network units. A part or all of the units may be selected according to actual needs, to implement the purpose of the solutions of the embodiments.

In addition, the functional units in the embodiments of the present disclosure may be integrated into a single processing unit or the functional units may be included physically and separately, or two or more units may be integrated into a unit. The above integrated units may be implemented in the form of hardware, or in the form of hardware plus software functional units.

The above integrated units implemented in the form of software functional units may be stored in a computer-readable storage medium. The above software functional units are stored in a storage medium and include several instructions for causing a computer device (which may be a personal computer, a server, or a gateway node, etc.) to execute part of the steps of the methods described in the various embodiments of the present disclosure.

A person of ordinary skill in the art may understand that implementing all or part of the processes in the methods of the above embodiments may be accomplished by instructing relevant hardware through computer programs, and the programs may be stored in a computer-readable storage medium. In a case of the programs being executed, the programs may include the processes of the embodiments of the above methods. Herein, the storage medium may be magnetic disk, optical disk, read only memory (ROM) or random access memory (RAM), etc.

What is disclosed above are only preferred embodiments of the present disclosure, and certainly it cannot be used to limit the scope of rights of the present disclosure. A person of ordinary skill in the art may understand that all or part of the processes in the above embodiments can be implemented, and equivalent changes made according to the claims of the present disclosure still fall within the scope covered by the present disclosure.

## Claims

1. A method for indicating a duration of a timer, **characterized by** comprising:
determining a duration of a timer, wherein the duration of the timer includes a storage duration for uplink information and/or downlink information on a flight device, the uplink information and/or the downlink information is information that needs to be transmitted during an operating process of the timer; and
sending indication information, wherein the indication information indicates the duration of the timer.

2. The method according to claim 1, wherein the method further comprises:
setting a value of the timer based on the duration of the timer.

3. The method according to claim 1 or 2, wherein the method is applied to a first communication apparatus;
the first communication apparatus is a network element in a core network, or the first communication apparatus is an access network device, or the first communication apparatus is a terminal device.

4. The method according to claim 3, wherein the core network and the terminal device are deployed in a ground network, and the access network device is deployed in a satellite.

5. The method according to claim 3 or 4, wherein sending the indication information includes:
sending the indication information to a second communication apparatus;
wherein the second communication apparatus comprises at least one of: an access and mobility management function (AMF) network element, a session management function (SMF) network element, a policy control function (PCF) network element, a terminal device or user plane function (UPF) network element, an access network device, a unified data management (UDM), an authentication server function (AUSF), a mobility management entity (MME), a short message service center (SMSC), a serving-gateway, a packet data network (PDN) gateway.

6. The method according to claim 5, wherein the first communication apparatus is the AMF network element, the second communication apparatus is the terminal device, and the indication information is carried in a non-access stratum (NAS) signaling or a user plane message.

7. The method according to claim 6, wherein the NAS signaling includes one of: an identity request, an authentication request, a registration response, a downlink NAS transport, a configuration update message for the terminal device, a short message.

8. The method according to any one of claims 1 to 7, wherein the indication information includes an index value and a time unit, wherein the index value indicates a number of time units included in the duration of the timer.

9. The method according to any one of claims 1 to 8, wherein the flight device is a satellite, and determining the duration of the timer includes:
determining the duration of the timer according to satellite information, wherein the satellite information includes information of a constellation associated with the satellite and/or operating information of the satellite.

10. The method according to claim 9, wherein the operating information of the satellite comprises at least one of: ephemeris data of the satellite, an orbital altitude of the satellite, an operating period of the satellite, a position of the satellite, or a working time of the satellite;
the information of the constellation associated with the satellite includes at least one of: a number of satellites included in the constellation associated with the satellite, a number of satellites connected to a ground station in the constellation associated with the satellite, operating information of respective satellites included in the constellation associated with the satellite, and communication information between the satellites in the constellation associated with the satellite and the ground station.

11. The method according to claim 9 or 10, wherein determining the duration of the timer according to the satellite information comprises:
determining the duration of the timer based on the satellite information and information of a third communication apparatus;
wherein the information of the third communication apparatus includes information of a ground station and/or information of a terminal device; the information of the ground station includes position information of the ground station and/or time information about the ground station being capable of receiving and sending information, and the information of the terminal device includes position information of the terminal device and/or time information about the terminal device being capable of receiving and sending information.

12. The method according to claim 11, wherein the position information of the ground station includes at least one of: a geographical position of the ground station, a height of the ground station, and a speed of the ground station; the time information about the ground station being capable of receiving and sending information includes an operating time of the ground station;
the position information of the terminal device includes at least one of: a geographical position of the terminal device or a speed of the terminal device; and the time information about the terminal device being capable of receiving and sending information includes at least one of: a time for periodic registration for the terminal device, a time for de-registration for the terminal device, power-saving information of the terminal device, and a sleep time of the terminal device.

13. The method according to claim 11 or 12, wherein the information of the satellite and/or the information of the ground station is from an application server and/or an operation management function network element, and the information of the terminal device is from the terminal device, or the application server, or the operation management function network element.

14. A method for indicating a duration of a timer, **characterized by** comprising:
receiving indication information, wherein the indication information indicates a duration of a timer, the duration of the timer includes a storage duration for uplink information and/or downlink information on a flight device, the uplink information and/or the downlink information is information that needs to be transmitted during an operating process of the timer; and
setting a value of the timer according to the duration of the timer.

15. The method according to claim 14, wherein the indication information includes an index value and a time unit, wherein the index value indicates a number of time units included in the duration of the timer.

16. The method according to claim 14 or 15, wherein setting the value of the timer according to the duration of the timer includes:
updating the value of the timer to the duration of the timer; or setting a remaining operating duration of the timer as a difference between the duration of the timer and a duration that the timer already has operated.

17. The method according to claim 16, wherein setting the remaining operating duration of the timer as the difference between the duration of the timer and the duration that the timer already has operated further comprises:
sending a message and initiating the timer, wherein an initial value of the timer is a default value or a pre-configured value.

18. The method according to claim 17, wherein the flight device is a satellite, and the initial value is determined based on at least one of a network identifier selected by the terminal device, an access technology for the satellite, and an operating mode of a network where the satellite is located;
the access technology includes one of: low orbit satellite access, medium orbit satellite access, or high orbit satellite access; the operating mode is a store-and-forward mode, wherein in the store-and-forward mode, in response to that the satellite is not capable of performing communication with a ground station or a terminal device, the uplink information and/or the downlink information is stored in a device in the satellite, and in response to that the satellite is capable of performing communication with the ground station or the terminal device, the stored uplink information and/or downlink information is forwarded to the ground station or the terminal device.

19. The method according to any one of claims 14 to 18, wherein the indication information is carried in a non-access stratum (NAS) signaling or a user plane message.

20. A communication apparatus, **characterized by** comprising:
a determination unit, configured to determine a duration of a timer, wherein the duration of the timer includes a storage duration for uplink information and/or downlink information on a flight device, the uplink information and/or the downlink information is information that needs to be transmitted during an operating process of the timer; and
a sending unit, configured to send indication information, wherein the indication information indicates the duration of the timer.

21. A communication apparatus, **characterized by** comprising:
a receiving unit, configured to receive indication information, wherein the indication information indicates a duration of a timer, the duration of the timer includes a storage duration for uplink information and/or downlink information on a flight device, the uplink information and/or the downlink information is information that needs to be transmitted during an operating process of the timer; and
a setting unit, configured to set a value of the timer according to the duration of the timer.

22. A communication apparatus, **characterized in that** the communication apparatus comprises a processor and a memory, wherein the processor and the memory are connected to each other, wherein the memory is configured to store computer programs, the computer programs comprises program instructions, the processor invokes the program instructions to execute the method according to any one of claims 1 to 13, or to execute the method according to any one of claims 14 to 19.

23. A chip, **characterized in that** the chip comprises a processor and an interface, wherein the processor is coupled to the interface; the interface is configured to receive or output a signal, and the processor is configured to execute code instructions, to execute the method according to any one of claims 1 to 13, or to execute the method according to any one of claims 14 to 19.

24. A module device, **characterized in that** the module device comprises a communication module, a power module, a storage module, and a chip module, wherein
the power module is configured to provide electrical energy to the module device;
the storage module is configured to store data and/or instructions;
the communication module is configured to communicate with external devices;
the chip module is configured to invoke the data and/or instructions stored in the storage module, to execute the method according to any one of claims 1 to 13, or to execute the method according to any one of claims 14 to 19.

25. A computer-readable storage medium, **characterized in that** the computer-readable storage medium stores computer programs, the computer programs include program instructions, upon a computer executing the program instructions, the method according to any one of claims 1 to 13 is implemented; or the method according to any one of claims 14 to 19 is implemented.
